# EUROPÄISCHE PATENTSCHRIFT

(11) **EP 3 827 890 B1**
(45) Veröffentlichungstag und Bekanntmachung des Hinweises auf die Patenterteilung: **23.08.2023**
(21) Anmeldenummer: 20209876.0
(22) Anmeldetag: 25.11.2020
(51) Int. Cl.: B01D 21/00, B01D 21/24, B03D 1/08, B03D 1/14, B01D 21/04

(54) **AUFBEREITUNGSEINRICHTUNG UND VERFAHREN ZUM AUFBEREITEN VON MIT FESTSTOFFEN BELADENER PROZESSFLÜSSIGKEIT**
TREATMENT DEVICE AND METHOD FOR TREATING PROCESS FLUID LOADED WITH SOLIDS
DISPOSITIF DE TRAITEMENT ET PROCÉDÉ DE TRAITEMENT DU LIQUIDE DE PROCESSUS À CHARGE SOLIDE

(30) Priorität: 26.11.2019 AT 510272019
(43) Veröffentlichungstag der Anmeldung: 02.06.2021
(73) Patentinhaber: LUBOT Schmierstoff- und Prozesstechnik GmbH, 2120 Obersdorf (AT)
(72) Erfinder: Mali, Harald, 2122 Riedenthal (AT)
(74) Vertreter: Patentanwälte Pinter & Weiss OG

(56) Entgegenhaltungen:
- EP-A2- 0 029 222
- EP-A2- 0 140 310
- EP-B1- 0 029 222
- EP-B1- 0 140 310
- DE-A1- 4 115 819
- US-A- 5 176 837

## Beschreibung

Die gegenständliche Erfindung betrifft eine Aufbereitungseinrichtung zum Aufbereiten von mit Feststoffen beladener Prozessflüssigkeit durch das Trennen der Prozessflüssigkeit und der Feststoffe, wobei in der Aufbereitungseinrichtung eine Filteranlage mit einem Abscheidefilter zur Filtration der Feststoffe aus der Prozessflüssigkeit vorgesehen ist, wobei in der Aufbereitungseinrichtung ein Prozessflüssigkeitsbehälter zur Aufnahme von in der Filteranlage gefilterter Prozessflüssigkeit vorgesehen ist.

Werkzeugmaschinen, wie Drehmaschinen, Fräsmaschinen, Schleifmaschinen usw., zum spanenden Bearbeiten von Werkstücken, insbesondere aus Metall, oder auch andere Bearbeitungsmaschinen, arbeiten mit wassergemischten oder nichtwassergemischten Kühl-Schmierstoffen (im Folgenden nur mehr kurz Schmierstoff). Der Schmierstoff wird an der Maschine umgewälzt, um das Werkzeug zu kühlen und zu schmieren. An der Bearbeitungsstelle werden mit dem Schmierstoff auch Feststoffe, wie beispielsweise Späne verschiedener Größe, Schleifabrieb usw., abtransportiert. Der mit den Feststoffen beladene Schmierstoff wird in einer Aufbereitungseinheit von den Feststoffen befreit und der reine Schmierstoff wird in einem Schmierstofftank gesammelt und mittels einer Pumpe bedarfsweise wieder der Bearbeitungsstelle zugeführt. Auch in anderen Bearbeitungsprozessen können Flüssigkeiten verwendet werden, die durch die Verwendung mit Feststoffen verunreinigt werden, beispielsweise Reinigungsflüssigkeiten zum Reinigen von Maschinen oder Anlagen. In weiterer Folge wird daher allgemein von Prozessflüssigkeit, wie beispielsweise Schmiermittel, Reinigungsflüssigkeiten usw., gesprochen

Im Stand der Technik sind eine Fülle von Filtereinheiten und Abscheideeinheiten bekannten mittels denen eine Prozessflüssigkeit und die Feststoffe getrennt werden können.

Bekannte Vorrichtung sind beispielsweise Sedimentations- oder Flotationsfilteranlagen. Bei Flotationsfilteranlagen wird die mit Feststoffen beladene Flüssigkeit in einem Behälter gesammelt. Dem Behälter wird von außen Luft zugeführt. Die zugeführte Luft bildet Luftbläschen, die an den Feststoffen anhaften, wodurch die Feststoffe an die Oberfläche steigen und sich dort ansammeln. Die Feststoffe an der Oberfläche können dann abgeführt werden. Ein Beispiel dafür findet sich in der EP 140 310 A2. Bei Sedimentationsfilteranlage sinken die Feststoffe auf den Boden und werden von dort abgeführt. Mit solchen Flotationsfilteranlage oder Sedimentationsfilteranlagen können allerdings in der Regel nicht die gewünschten Reinheitsgrade der Flüssigkeit für die Verwendung in einer Werkzeugmaschine oder einem anderen Bearbeitungsprozess erzielt werden.

Ebenso bekannt sind Bandfilteranlagen, wobei entweder ein Vliesfilter oder ein Endlosband zur Filterung verwendet werden. Ein Endlosband wird im Kreis geführt und ständig zum Filtern verwendet, wohingegen ein Vlies mit dem Filterkuchen abtransportiert wird und laufend ersetzt werden muss. Bei solchen Anlagen wird die mit Feststoffen beladene Prozessflüssigkeit über das Filterband geführt, an dem sich die Feststoffe abscheiden. Die Feststoffe bilden einen Filterkuchen auf dem Filterband und die Prozessflüssigkeit rinnt durch den Filterkuchen und das Filterband und kann unterhalb gesammelt werden. Der sich aufbauende Filterkuchen unterstützt die Filterung. Üblicherweise wird dabei der Flüssigkeitsstand über dem Filterband gemessen. Überschreitet der Flüssigkeitsstand ein definiertes Maß wird das Filterband ein Stückchen weiterbewegt, sodass die Filterleistung durch unbeladenes Filterband erhöht wird. Das Problem bei solchen Bandfilteranlagen ist, dass sie eine möglichst große Filterfläche aufweisen sollten für einen langsamen Filterkuchenaufbau. Üblicherweise wird aber ein Kompromiss gewählt damit die Bandfilteranlage eine akzeptable Baugröße aufweist. Aufgrund der reduzierten Baugröße ergibt sich damit aber eine reduzierte Literleistung pro Zeiteinheit, also die Menge an Schmierstoff pro Zeiteinheit, die in der Bandfilteranlage gefiltert werden kann. Durch die reduzierte Literleistung pro Zeiteinheit kommt es oftmals zu einer Überlastung und das Filterband muss schnell weiterbewegt werden, um den Flüssigkeitsstand im gewünschten Bereich zu halten. Damit kann sich nur ein niedriger Filterkuchen aufbauen, was die Filterleistung beeinträchtigt. Abgesehen davon führt das auch zu einem hohen Verbrauch von Filtervlies. Beispiele solcher Filtereinheiten können der DE 41 35 010 A1 oder der KR 200230079 Y1 entnommen werden. Ähnliche Probleme ergeben sich auch bei anderen Filtertypen mit Abscheidefiltern zum Abscheiden der Feststoffe, wie beispielsweise Kerzenfiltern oder Kerzenspaltfiltern, etc.

Die EP 29 222 A2 beschreibt eine integrierte Flotations-Filtrations-Anlage mit einem Tank, der von einem Bandfilter diagonal durchzogen wird. Das Bandfilter trennt den Tank in eine Reinzone unterhalb des Bandfilters und in eine Flotationszone oberhalb des Bandfilters. Am Bandfiltern lagern sich im Tank durch Sedimentation absinkende Feststoffpartikel ab. Zusätzlich werden am Bandfilter sich im oberen Bereich des Tanks durch Flotation sammelnde aufsteigende Feststoffpartikel mitgenommen. Unterhalb des Bandfilters befindet sich demnach reine Prozessflüssigkeit, die aus dem Tank entnommen werden kann. Eine nachgeschaltete Filtration ist nicht vorgesehen. Die Konstruktion der Flotations-Filtrations-Anlage ist jedoch aufwendig, weil das bewegte Filterband im Tank gegenüber der Tankwand abgedichtet werden muss, um eine Querströmung von verunreinigter Prozessflüssigkeit aus der Flotationszone in die Reinzone zu unterbinden. Abgesehen davon muss eine große Menge Prozessflüssigkeit durch das Bandfilter durchströmen und es muss ein zu dichter Filterkuchen am Bandfilter verhindert werden, um Stockungen zu verhindern.

Aus der JP 2001 314 703 A1 ist eine Bandfilteranlage bekannt, bei der am Bandfilter gefilterter Schmierstoff über einen Aggregator geführt wird, in dem die verbliebenen Fein-Feststoffpartikel zu größeren Feststoffpartikeln zusammenwachsen, und vom Aggregator nochmals über den Bandfilter geführt wird. Damit kann die Reinheit des gefilterten Schmierstoffes erhöht werden. Allerdings löst das nicht das Problem des schlechten Filterkuchenaufbaus am Bandfilter und den hohen Verbrauch von Bandfilter. Im Gegenteil muss der Bandfilter damit eine noch größere Menge an Schmierstoff verarbeiten.

Die US 5,176,837 offenbart einen Sedimentationstank, welcher Prozessflüssigkeit mit Partikeln aus einen Reservoir über Leitung erhält. Die Prozessflüssigkeit wird über einen Überlauf und über einen Bodenabzug einer Filteranlage zugeführt und gereinigt. Zur Erzeugung eines Unterdrucks in der Filteranlage wird eine Venturipumpe verwendet, die Flüssigkeit über einen Filter im Tank erhält. Die Entnahmeleitung ist am oberen Ende des Filters im oberen Bereich des Tanks angeordnet und nutzt Pumpe dazu, um der Venturipumpe partikelfreie Flüssigkeit zuzuführen. Auch hier wird Sedimentation in Kombination mit einer Filteranlage zum Aufreinigen der Prozessflüssigkeit verwendet.

Ausgehend vom bekannten Stand der Technik ist es eine Aufgabe der Erfindung den Aufbau des Filterkuchens auf einem Abscheidefilter einer Filteranlage zum Filtern von mit Feststoffen beladener Prozessflüssigkeit zu verbessern, sodass sich eine verbesserte Filterleistung einer Aufbereitungseinrichtung mit einer solchen Filteranlage ergibt.

Diese Aufgabe wird erfindungsgemäß dadurch gelöst, dass in der Aufbereitungseinrichtung ein Flotationstank und eine Zuführleitung zum Zuführen von unreiner, mit Feststoffen beladener und mit Luftbläschen versetzter Prozessflüssigkeit vorgesehen sind, wobei die Zuführleitung mit dem Flotationstank verbunden ist und sich im Flotationstank Feststoffpartikel durch Flotation in einen oberen Bereich und durch Sedimentation in einem unteren Bodenbereich des Flotationstanks sammeln, dass sich im Flotationstank zwischen dem oberen Bereich und dem Bodenbereich ein Entnahmebereich mit Prozessflüssigkeit ausbildet und eine Entnahmeleitung vorgesehen ist, wobei der Entnahmebereich im unteren Drittel des Flotationstanks über dem Bodenbereich liegt, um Prozessflüssigkeit aus dem Entnahmebereich zu entnehmen und/oder im Flotationstank ein Kanal vorgesehen ist, der an einem Ende im Bereich des Bodenbereich mündet und am gegenüberliegenden Ende in einem vom Flotationstank getrennten Entnahmebehälter mündet und eine zweite Entnahmeleitung vorgesehen ist, um Prozessflüssigkeit aus dem Entnahmebehälter zu entnehmen, und dass in der Aufbereitungseinrichtung Leitungen vorgesehen sind, um den Abscheidefilter aus dem oberen Bereich des Flotationstanks und aus dem Bodenbereich des Flotationstanks mit mit Feststoffen beladener Prozessflüssigkeit zu beaufschlagen.

Durch die Flotation und die Sedimentation im Flotationstank werden im oberen Bereich und im Bodenbereich Bereiche mit erhöhter Feststoffkonzentration geschaffen. Damit muss weniger Prozessflüssigkeitsmenge über den Abscheidefilter der Filteranlage geführt werden, womit die Filteranlage zur Abscheidung der Feststoffe mit einer geringeren Menge an Prozessflüssigkeit beaufschlagt werden muss. Damit reduziert sich die Gefahr von Stockungen und Rückstau von Prozessflüssigkeit am Abscheidefilter. Gleichzeitig kann sich ein dickerer Filterkuchen am Abscheidefilter aufbauen, was die Filtration unterstützt. Gleichfalls kann damit der Verbrauch von Abscheidefilter reduziert werden oder die Häufigkeit der Reinigung des Abscheidefilters reduziert werden. Die Filteranlage kann damit ebenso kleiner dimensioniert werden, weil diese eine kleinere Literleistung pro Zeiteinheit erbringen muss.

Aus dem Prozessflüssigkeitsbehälter kann über die Entnahmeleitung (hoch)reine Prozessflüssigkeit entnommen werden und für die weitere Verwendung, beispielsweise in einer Bearbeitungsmaschine, bereitgestellt werden. Die Prozessflüssigkeit im Prozessflüssigkeitsbehälter hat eine hohe Reinheitsklasse, die insbesondere von der Ausführung der Filteranlage abhängig ist und die an die jeweilige Anforderung angepasst werden kann.

Im Flotationstank zwischen dem oberen Bereich und dem Bodenbereich bildet sich ein Entnahmebereich für Prozessflüssigkeit aus, aus dem mit einer zweiten Entnahmeleitung Prozessflüssigkeit entnommen wird. Diese Prozessflüssigkeit kann bereits als reine Prozessflüssigkeit betrachtet werden, hat aber in der Regel eine geringere Reinheitsklasse, als die Prozessflüssigkeit im Prozessflüssigkeitsbehälter. Es können damit mit der Aufbereitungseinrichtung Prozessflüssigkeiten mit verschiedener Reinheitsklasse bereitgestellt werden. Eine solche reine Prozessflüssigkeit kann auch bereitgestellt werden, wenn Prozessflüssigkeit im Flotationstank über den Bodenbereich mittels eines Kanals in einen Entnahmebehälter gefördert wird.

Wenn eine Rückförderleitung vorgesehen ist, die den Prozessflüssigkeitsbehälter mit dem Flotationstank verbindet, um Prozessflüssigkeit aus dem Prozessflüssigkeitsbehälter dem Flotationstank zuzuführen, kann die Zirkulation von Prozessflüssigkeit in einem internen Kreislauf aufrechterhalten werden, auch wenn die Aufbereitungsanlage gerade keine unreine Prozessflüssigkeit verarbeiten muss.

Die Filterleistung kann erhöht werden, wenn die Filteranlage mehrstufig ausgeführt ist mit einem Grobfilter, der mit Prozessflüssigkeit aus dem oberen Bereich des Flotationstanks und aus dem Bodenbereich des Flotationstank beaufschlagt ist, und mit einem Feinfilter, die mit im Grobfilter grobgefilterte Prozessflüssigkeit beaufschlagt ist, wobei der Prozessflüssigkeitsbehälter die im Feinfilter gefilterte Prozessflüssigkeit aufnimmt.

Um Energie einzusparen, kann vorgesehen sein, dass der Abscheidefilter aus dem Bodenbereich des Flotationstanks nur zeitweise mit mit Feststoffen beladener Prozessflüssigkeit beaufschlagt wird, insbesondere dann, wenn sich im Bodenbereich ausreichend Feststoffe angesammelt haben.

Die Abscheideleistung der Aufbereitungseinrichtung kann erhöht werden, wenn Feststoffe aus dem Bodenbereich des Flotationstanks und/oder aus dem oberen Bereich mit einem Feststoffförderer aus dem Flotationstank gefördert werden.

Die gegenständliche Erfindung wird nachfolgend unter Bezugnahme auf die Figuren 1 bis 3 näher erläutert, die beispielhaft, schematisch und nicht einschränkend vorteilhafte Ausgestaltungen der Erfindung zeigen. Dabei zeigt
- Fig.1: eine Ausgestaltung einer Aufbereitungsanlage nach der Erfindung,
- Fig.2: eine mehrstufige Filteranlage der Aufbereitungseinrichtung und
- Fig.3: eine weitere Ausgestaltung eines Flotationstanks einer Aufbereitungsanlage.

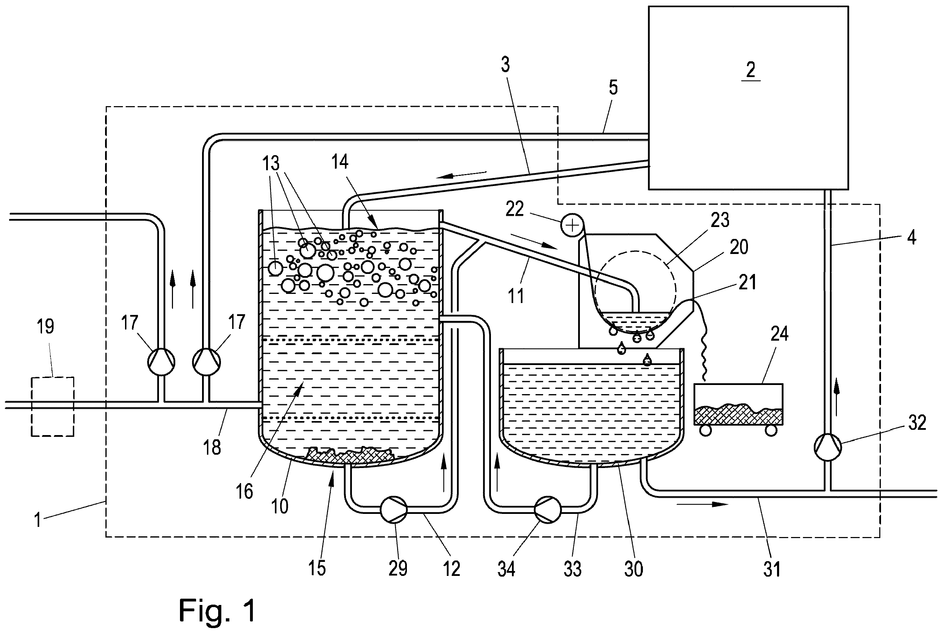

Eine Ausgestaltung einer erfindungsgemäßen Aufbereitungseinrichtung 1 einer Prozessflüssigkeit aus einer Bearbeitungsmaschine 2 in einem Ausführungsbeispiel ist in Fig.1 gezeigt. In der Bearbeitungsmaschine 2, beispielsweise eine Werkzeugmaschine, wird die Prozessflüssigkeit für den Bearbeitungsprozess verwendet. Als Prozessflüssigkeit wird jedes flüssige Prozessfluid für die Bearbeitungsmaschine 2 verstanden, das für die Durchführung eines Bearbeitungsprozesses benötigt wird und das dabei mit Feststoffen, wie Späne, Abrieb usw., verunreinigt und aus der Bearbeitungsmaschine 2 abgeführt wird. Die mit Feststoffen beladene unreine Prozessflüssigkeit wird aus der Bearbeitungsmaschine 2 abgeführt und der Aufbereitungseinrichtung 1 über eine Zuführleitung 3 zugeführt, beispielsweise durch Vorsehen eines entsprechenden Gefälles der Zuführleitung 3 oder durch eine Hebepumpe.

In der Aufbereitungseinrichtung 1 werden die Feststoffe aus der unreinen Prozessflüssigkeit bis zu einer bestimmten Reinheitsklasse entfernt. Die (hoch)reine Prozessflüssigkeit kann dann der Bearbeitungsmaschine 2 über eine Abführleitung 4 der Aufbereitungseinrichtung 1 zugeführt werden und dort für den Bearbeitungsprozess verwendet werden. Die Prozessflüssigkeit kann damit über die Bearbeitungsmaschine 2 im Kreis gefördert werden, was aber nicht unbedingt erforderlich ist.

Es ist auch möglich, dass in der Aufbereitungseinrichtung 1 verschiedene Reinheitsklassen der Prozessflüssigkeit des Schmierstoffes erzeugt werden. Beispielsweise kann eine hochreine Prozessflüssigkeit der Bearbeitungsmaschine 2 über die Abführleitung 4 zugeführt werden und eine reine Prozessflüssigkeit, also mit einer niedrigeren Reinheitsklasse als die hochreine Prozessflüssigkeit, kann der Bearbeitungsmaschine 2 über eine weitere Abführleitung 5 der Aufbereitungseinrichtung 1 zugeführt werden. Die in der Aufbereitungseinrichtung 1 aufbereitete Prozessflüssigkeit, auch in den verschiedenen Reinheitsklassen, kann auch anderen Prozessen, beispielsweise weiteren Bearbeitungsmaschinen oder anderen Bearbeitungsprozessen in der Bearbeitungsmaschine 2, zugeführt werden, wie in Fig.1 durch abgerissenen Leitungen angedeutet.

In der Aufbereitungseinrichtung 1 gemäß der Erfindung sind ein Flotationstank 10, eine Filteranlage 20 und ein Schmiermittelbehälter 30 zur Aufnahme von (hoch)reiner Prozessflüssigkeit vorgesehen.

Die unreine Prozessflüssigkeit, z.B. aus der Bearbeitungsmaschine 2, wird zuerst dem Flotationstank 10 zugeführt, beispielsweise von oben oder im oberen Bereich 14, wobei auch eine andere Zuführung prinzipiell denkbar wäre. Vorzugsweise wird die unreine Prozessflüssigkeit in tangentialer Richtung (bezogen auf den Umfang des Flotationstanks 10) zugeführt, wodurch eine Zirkulation der Prozessflüssigkeit im Flotationstank 10 in Umfangsrichtung entsteht (ein sogenannter Hydrozyklonbetrieb). Eine solche Zirkulation im Flotationstank 10 ist aber nicht zwingend erforderlich. Die unreine Prozessflüssigkeit aus der Bearbeitungsmaschine 2 kommt üblicherweise mit vielen Luftbläschen versetzt in den Flotationstank 10. Diese Luftbläschen 13 können im Flotationstank 10 gleichzeitig zur Abscheidung der Feststoffe in der Prozessflüssigkeit genutzt werden. Die Luftbläschen 13 steigen im Flotationstank 10 nach oben und nehmen dabei Feststoffpartikel bis zu einer bestimmten Größe und Gewicht mit. Diese kleineren und leichteren Feststoffpartikel 14, beispielsweise feiner Abrieb und Späne bis zu einer bestimmten Größe, sammeln sich dadurch im oberen Bereich 14 des Flotationstanks 10. Es wäre dabei auch möglich zur Unterstützung Luft (oder ein anderes Gas) zur Erzeugung von Luftbläschen 13 von außen in den Flotationstank 10 zuzuführen. Die größeren und schwereren Feststoffpartikel 15, beispielsweise größere Späne, sinken zum Boden des Flotationstanks 10 und sammeln sich dort im Bodenbereich 15.

Im Flotationstank 10 erfolgt somit eine Konzentration der Feststoffe in der Prozessflüssigkeit im oberen Bereich 14 durch Flotation der Feststoffe an die Oberfläche und im Bodenbereich 15 durch Sedimentation.

Im Flotationstank 10 bildet sich damit im Bereich, zwischen dem oberen Bereich 14 und dem Bodenbereich 15, ein Entnahmebereich 16 mit reiner Prozessflüssigkeit aus. Dieser Entnahmebereich 16 liegt im unteren Drittel des Flotationstanks 10 über dem Bodenbereich 15. Diese Prozessflüssigkeit kann immer noch mit Feststoffpartikeln in einer bestimmten Größenverteilung versetzt sein, kann aber bereits als reine Prozessflüssigkeit betrachtet werden und kann für weniger sensible Aufgaben verwendet werden. Beispielsweise können in der Bearbeitungsmaschine 2 bestimmte Prozesse, die keine hochreine Prozessflüssigkeit benötigen, mit dieser reinen Prozessflüssigkeit versorgt werden. Diese reine Prozessflüssigkeit kann aus dem Entnahmebereich 16 mit einer Entnahmeleitung 18 und einer Umwälzpumpe 17 entnommen werden und beispielsweise über die Zuführleitung 5 für reine Prozessflüssigkeit der Bearbeitungsmaschine 2 oder anderen Prozessen oder Anlagen zugeführt werden. Es sei aber angemerkt, dass die Prozessflüssigkeit aus diesem Entnahmebereich 16 aber nicht zwingend für einen Bearbeitungsprozess genutzt werden muss. Die Entnahme aus dem Entnahmebereich 16 kann auch für eine interne Umwälzung genutzt werden, beispielsweise für eine Umwälzung bei fehlendem Rückfluss von Prozessflüssigkeit aus der Bearbeitungsmaschine 2 in die Aufbereitungseinrichtung 1.

Die reine Prozessflüssigkeit aus dem Entnahmebereich 16 könnte aber auch über einen zusätzlichen Feststofffilter 19 (angedeutet in Fig.1) geführt werden, um die Reinheitsklasse zu erhöhen, bevor die reine Prozessflüssigkeit weiterverwendet wird. Hierfür können beliebige geeignete Feststofffilter 19 verwendet werden. Der Feststofffilter 19 wird dabei nur mehr mit gering mit Feststoffen belastet.

Die Erfindung wird mit Bezugnahme auf die Fig.1 am Beispiel eines Vliesbandfilters als Filteranlage 20 beschrieben, wobei auch andere Filtertypen, wie beispielsweise Kerzenfilter, Kerzenspaltfilter usw., möglich sind. Filteranlagen 20 sind in verschiedenen Ausführungen bekannt und können allesamt eingesetzt werden, beispielsweise als Rückspülfilter, Unterdruckfilter, Überdruckfilter, auch jeweils als Endlosbandfilter oder Vliesbandfilter. Gemein ist solchen Filteranlagen 20, dass die zu reinigende Flüssigkeit, hier konkret eine Prozessflüssigkeit, über ein Abscheidefilter 21 geführt werden, an dem sich die Feststoffe abscheiden und sammeln und die Flüssigkeit durchtritt.

Die Filteranlage 20 des Ausführungsbeispiels umfasst ein Abscheidefilter 21, beispielsweise ein Endlosfilterband mit einem umlaufenden Bandfilter 21 oder ein Vliesband, das von einer Rolle 22 abgewickelt wird (wie in Fig.1). In der Filteranlage 20 kann eine Trommel 23 vorgesehen sein, die zumindest im unteren Bereich perforiert ist. An der Innenseite der Trommel 23 liegt im unteren Bereich der Abscheidefilter 21 an. Die mit Feststoffen beladene Prozessflüssigkeit wird über eine Filterzuführungsleitung 11 in die Trommel 23 zugeführt, entweder durch Vorsehen eines Gefälles in der Filterzuführungsleitung11 (wie in Fig.1) oder mit Hilfe einer Pumpe. Die der Trommel 23 zugeführte Prozessflüssigkeit fließt durch das Abscheidefilter 21, wodurch Feststoffe am Abscheidefilter 21 abgeschieden werden und sich am Abscheidefilter 21 ein Filterkuchen aus den abgeschiedenen Feststoffen aufbaut. Der Filterkuchen unterstützt die Filtration der Prozessflüssigkeit. In der Trommel 23 ist eine Niveauüberwachung vorgesehen. Steigt das Prozessflüssigkeitsniveau in der Trommel 23 über ein vorgegebenes Niveau, wird der Abscheidefilter 21 mit dem Filterkuchen weiterbewegt und frischer Abscheidefilter 21 zugeführt, oder der Abscheidefilter 21 gereinigt, beispielsweise durch Rückspülung oder mechanischer Entfernung des Filterkuchens. Damit kann die Prozessflüssigkeit wieder rascher abfließen und das Niveau sinkt. Ist der Filterkuchen zu dicht kann die Prozessflüssigkeit nur schlecht durch den Filterkuchen fließen und das Prozessflüssigkeitsniveau steigt in der Trommel 23 rasch an, womit viel Abscheidefilter 21 verbraucht wird, weil der Abscheidefilter 21 häufig weiterbewegt werden muss. Bei anderen Ausführungen der Filteranlage 20 kann eine oftmalige Reinigung des Abscheidefilters 21 erforderlich sein. Ähnliche Probleme treten auf, wenn die Flüssigkeitsmenge, die über den Abscheidefilter 21 geführt wird, zu groß ist. Der abgeführte Abscheidefilter 21 (falls kein Endlosbandfilter verwendet wird) mit dem Filterkuchen wird in einem Behältnis 24 gesammelt und kann damit entfernt werden.

Die durch den Abscheidefilter 21 fließende, von Feststoffen befreite, (hoch)reine Prozessflüssigkeit wird in einem Prozessflüssigkeitsbehälter 30 gesammelt. Der Reinheitsgrad der Prozessflüssigkeit im Prozessflüssigkeitsbehälter 30 hängt natürlich in erster Linie vom ausgewählten Filtersystem der Filteranlage 20 ab, insbesondere davon, bis zu welchen Feststoffpartikelgrößen die Filteranlage 20 filtert. Das kann natürlich auch an die jeweiligen Anforderungen an die Aufbereitungseinrichtung 1 angepasst werden.

Aus dem Prozessflüssigkeitsbehälter 30 kann die reine Prozessflüssigkeit über eine Entnahmeleitung 31 entnommen werden und über eine Umwälzpumpe 32 und der Zuführleitung 4, oder weiteren Leitungen, aus der Aufbereitungseinrichtung 1 befördert werden, beispielsweise in die Bearbeitungsmaschine 2.

Es ist erfindungsgemäß vorgesehen, dass die Filteranlage 20 nicht direkt mit der Prozessflüssigkeit aus der Bearbeitungsmaschine 2 beladen wird, sondern mit Prozessflüssigkeit aus dem Flotationstank 10. Dabei wird aus dem Flotationstank 10 Prozessflüssigkeit sowohl aus dem oberen Bereich 14, als auch aus dem unteren Bodenbereich 15 entnommen und über die Prozessflüssigkeitsleitung 11, oder auch über separate Leitungen aus den verschiedenen Bereichen, der Bandfilteranlage 20 zugeführt.

Zur Entnahme aus dem Bodenbereich 15 des Flotationstanks 10 ist im Bodenbereich 14 eine Entnahmeeinrichtung vorgesehen. Je nach Art der zu erwartenden, sich absetzenden Feststoffe im Bodenbereich 15 kann die Entnahmeeinrichtung unterschiedlich ausgeführt sein.

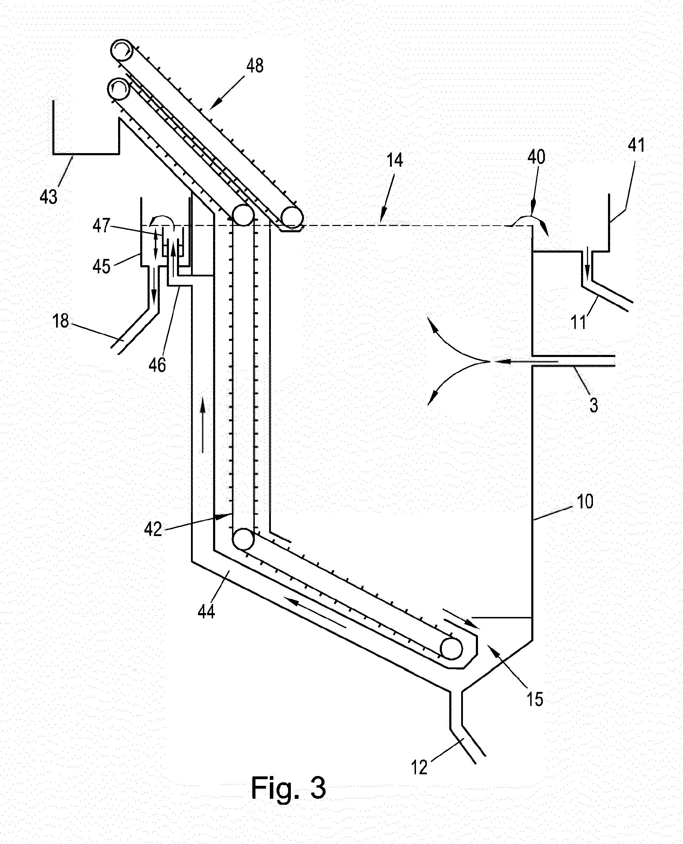

Im Ausführungsbeispiel nach Fig.1 ist als Entnahmeeinrichtung beispielsweise eine Bodenentnahmeleitung 12, in der eine Förderpumpe 29 angeordnet ist, vorgesehen. Die Bodenentnahmeleitung 12 mündet in die Filterzuführungsleitung 11, mit der Prozessflüssigkeit aus dem oberen Bereich des Flotationstanks 10 entnommen wird. Über die Bodenentnahmeleitung 12 kann aber Prozessflüssigkeit auch direkt dem Bandfilter 21 in der Bandfilteranlage 20 zugeführt werden. Die Bodenentnahmeleitung 12 kann aber auch im Inneren des Flotationstanks 10 geführt sein und könnte die Feststoffe im Bodenbereich 15 an die Oberfläche im oberen Bereich 14 des Flotationstank 10 fördern oder in einen Überlaufkanal 41 (wie in Fig.3), von wo diese mittels der Filterzuführungsleitung 11 entnommen werden können.

Es wurde festgestellt, dass die Filterleistung der Filteranlage 20 verbessert werden kann, wenn die unreine Prozessflüssigkeit aus der Bearbeitungsmaschine 2 zuerst im Flotationstank 10 vorbehandelt wird und nicht die gesamte Prozessflüssigkeit unmittelbar über die Bandfilteranlage 20 geführt wird. Durch die Abscheidung der Feststoffe im Flotationstank 10 wird im oberen Bereich 14 und im Bodenbereich 15 die Konzentration der Feststoffe in der Prozessflüssigkeit erhöht. Aufgrund dessen muss nicht mehr die gesamte Menge an Prozessflüssigkeit durch die Filteranlage 20 durchgeführt werden, sondern nur mehr die sich im oberen Bereich 14 sammelnde Prozessflüssigkeit mit erhöhter Feststoffkonzentration und die aus dem Bodenbereich 15 entnommen Prozessflüssigkeit mit erhöhter Feststoffkonzentration. Damit sinkt die in der Bandfilteranlage 20 zu verarbeitende Flüssigkeitsmenge, womit der Filterkuchen mehr Zeit hat sich am Bandfilter 21 aufzubauen. Die Gefahr der Überlastung der Filteranlage 20 durch zu hohe Mengen an Prozessflüssigkeit (Literleistung pro Zeiteinheit) wird dadurch reduziert. Gleichzeitig kann sich dadurch ein dickerer Filterkuchen am Abscheidefilter 21 aufbauen und der Verbrauch von Abscheidefilter 21 kann reduziert werden oder die Häufigkeit der Reinigung des Abscheidefilters 21 reduziert werden. Es können so deutlich dickere Filterkuchen erzielt werden, was die Filtration unterstützt, der Feststoffabscheidegrad steigt und der Verbrauch von Abscheidefilter 21 sinkt.

Prozessflüssigkeit aus dem Bodenbereich 15 muss dabei nicht permanent entnommen und der Filteranlage 20 zugeführt werden. Es ist ausreichend, wenn die Prozessflüssigkeit aus dem Bodenbereich 15 nur dann entnommen wird, wenn sich dort eine bestimmte Menge an Feststoffpartikeln angesammelt hat. Die Entnahmeeinrichtung, wie beispielsweise die Förderpumpe 29, muss daher nicht permanent in Betrieb sein, was hilft den Energieverbrauch zu senken.

Es kann auch vorgesehen werden, dass der Filteranlage 20 bedarfsweise auch Schmiermittel aus dem Entnahmebereich 16 im Flotationstank 10 zugeführt wird. Hierfür kann eine entsprechende Leitung aus dem Entnahmebereich 16 zum Beaufschlagen der Filteranlage 20 vorgesehen sein.

Es kann auch eine Rückförderleitung 33 vorgesehen sein, die den Prozessflüssigkeitsbehälter 30 mit dem Flotationstank 10 verbindet. In der Rückförderleitung 33 ist eine Rückförderpumpe 34 angeordnet, um (hoch)reine Prozessflüssigkeit aus dem Prozessflüssigkeitsbehälter 30 in den Flotationstank 10 zu fördern. Die Rückförderleitung 33 mündet vorzugsweise im oberen Bereich 14 oder oberhalb der Mitte des Flotationstanks 10 in den Flotationstank 10. Besonders vorteilhaft mündet die Rückförderleitung 33 in tangentialer Richtung in den Flotationstank 10, um die Zirkulation im Flotationstank 10 aufrechtzuerhalten oder zu unterstützen. Damit kann im internen Kreislauf weitergefiltert werden, obwohl keine Anforderung und somit auch kein Rücklauf von verunreinigter Prozessflüssigkeit von der Bearbeitungsmaschine 2 erfolgt. Auch ein Volumenausgleich bei Überfüllung des Prozessflüssigkeitsbehälters 30 kann so realisiert werden. So kann auch das Niveau im Prozessflüssigkeitsbehälter 30 gehalten werden. Damit kann ein Bereitschaftsmodus (Wochenendbetrieb) realisiert werden, um die Aufbereitungseinrichtung 1 mit geringem Energieaufwand betriebsbereit zu halten, auch wenn kein Rücklauf von Prozessflüssigkeit in die Aufbereitungseinrichtung 1 erfolgt.

Die Rückförderleitung 33 und die Rückförderpumpe 34 können auch zum Niveauausgleich im Flotationstank 10 verwendet werden, um das Flüssigkeitsniveau im Flotationstank 10 immer in einem für die Abscheidung vorteilhaften Bereich zu halten.

Wenn die Rückförderleitung 33 tangential in den Flotationstank 10 mündet, dann kann eine Zirkulation der Prozessflüssigkeit im Flotationstank 10 in Umfangsrichtung, die für die Abscheidung vorteilhaft ist, auch dann aufrechterhalten werden, wenn gerade keine Prozessflüssigkeit über die Umwälzpumpe 32 umgewälzt wird und keine Prozessflüssigkeit aus der Bearbeitungsmaschine 2 zurückfließt.

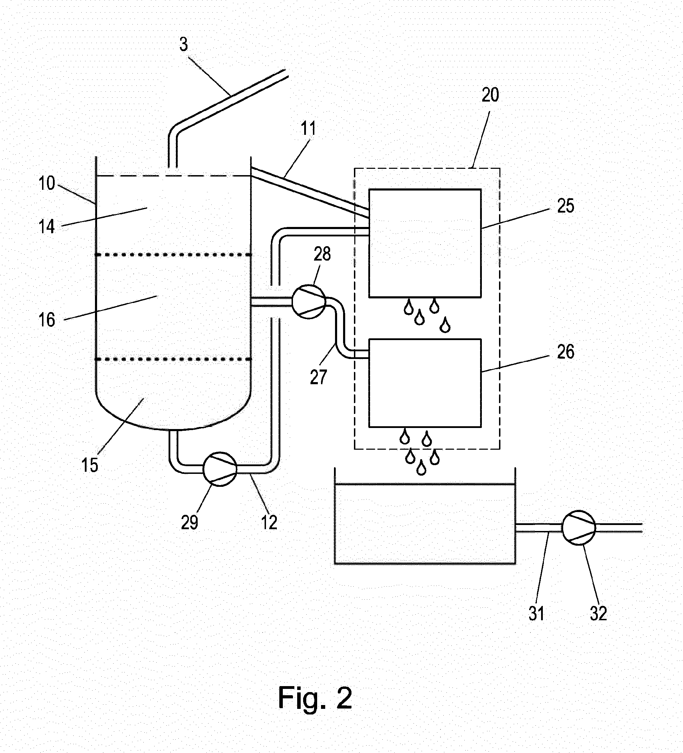

Es kann auch eine mehrstufige Filteranlage 20 vorgesehen sein, wie in Fig.2 dargestellt. Zuerst wird ein Grobfilter 25 wie mit Bezugnahme auf Fig.1 beschrieben mit Prozessflüssigkeit aus dem Flotationstank 10 beaufschlagt. Die darin grob vorgefilterte Prozessflüssigkeit wird einem Feinfilter 26 zugeführt. Der Grobfilter 25 und der Feinfilter 26 können wie die Filteranlage 20 in Fig.1 ausgeführt sein, können aber natürlich auch in Form anderer Filtersysteme ausgeführt sein. Die im Feinfilter 26 gefilterte Prozessflüssigkeit wird wieder in einem Prozessflüssigkeitsbehälter 30 gesammelt. Der Feinfilter 26 kann zusätzlich, permanent oder temporär, auch mit Prozessflüssigkeit aus dem Entnahmebereich 16 des Flotationstankes 10 beaufschlagt werden. Hierzu kann eine Leitung 27 vorgesehen sein, die den Flotationstank 10 mit dem Feinfilter 27 verbindet. In der Leitung 27 kann auch eine Förderpumpe 28 zur Förderung des Schmierstoffes aus dem Flotationstank 10 vorgesehen sein, oder eine Niveaudifferenzeinstellung, damit über den hydrostatischen Niveauunterschied ein Fluss entsteht. Die Entnahme aus dem Entnahmebereich 16 zur Beaufschlagung des Feinfilters 26 kann auch wie nachfolgend mit Bezugnahme auf Fig.3 beschrieben ausgeführt sein.

In Fig.3 ist eine weitere Ausgestaltung des Flotationstankes 10 dargestellt, wobei die restlichen Komponenten der Aufbereitungseinrichtung 1, wie z.B. die Filteranlage 20, Leitungen usw., der Einfachheit halber nicht dargestellt sind. In dieser Ausgestaltung des Flotationstankes 10 ist zusätzlich eine mechanische Förderung der Feststoffe aus dem Bodenbereich 15 vorgesehen, mit der insbesondere sehr große Feststoffe aus dem Flotationstankes 10 entfernt werden. In einer solchen Ausgestaltung kann die Aufbereitungsanlage 1 auch eine eigene Späneabscheideeinrichtung in der Bearbeitungsmaschine 2 obsolet machen, weil der Flotationstank 10 besser in der Lage ist absinkende und schwimmende, somit unterschiedlich schwere Feststoffe, zu verarbeiten. Speziell leichtere Späne als Feststoffe, wie Späne aus Aluminium und Kunststoff, können durch Flotation gut abgetrennt werden.

Die unreine Prozessflüssigkeit wird dem Flotationstank 10 wieder über eine Zuführleitung 3 zugeführt. Wie gehabt steigen bestimmte Feststoffanteile durch Flotation an den oberen Bereich 14 des Flotationstankes 10, wo diese beispielsweise über einen Überlauf in einen Überlaufkanal 41 gelangen, von wo diese über die Filterzuführungsleitung 11 der (nicht dargestellten) Filteranlage 20 zugeführt werden können. Ein derartiger Überlauf 40 mit Überlaufkanal 41 kann natürlich auch in der Ausführung des Flotationstankes 10 nach Fig.1 vorgesehen sein.

Zusätzlich ist im Flotationstank 10 ein Feststoffförderer 42, beispielsweise ein Kratzförderer, vorgesehen, der Feststoffe aus dem Bodenbereich 15 des Flotationstankes 10 aus dem Flotationstank 10 fördert. Der Feststoffförderer 42 erstreckt sich dazu beispielsweise vom Bodenbereich 15 über den oberen Bereich 14 des Flotationstanks 10 hinaus, wie in Fig.3 dargestellt. Mit dem Feststoffförderer 42 abgeführte Feststoffe, wie z.B. Späne, können in einem Feststoffbehälter 43 gesammelt werden.

Feststoffe, die weder in den oberen Bereich 14 aufsteigen, noch durch den Feststoffförderer 42 aus dem Bodenbereich 15 abgeführt werden, sammeln sich Bodenbereich 15, von wo diese wieder über eine Entnahmeeinrichtung, wie die Entnahmeleitung 12, abgeführt und der Filteranlage 20 zugeführt werden können. Prozessflüssigkeit mit Feststoffen aus dem Bodenbereich 15 könnte auch in den Überlaufkanal 41 zugeführt werden, um mit der Filterzuführungsleitung 11 in die Filteranlage 20 gefördert zu werden.

Die Entnahme von reiner Prozessflüssigkeit aus dem Flotationstank 10 erfolgt in der Ausführung nach Fig.3 nicht direkt aus einem Entnahmebereich 16 zwischen oberen Bereich 14 und Bodenbereich wie in Fig. 1. Im Flotationstank 10 ist in dieser Ausgestaltung ein Kanal 44 vorgesehen, beispielsweise im Bereich einer Wand des Flotationstankes 10 wie in Fig.3. Der Kanal 44 reicht vom Bodenbereich 15 oder oberhalb des Bodenbereichs 15 bis in den oberen Bereich 14 des Flotationstankes 10 und ist getrennt vom restlichen Flotationstank 10. Im Bereich des Bodenbereichs 15 kann Prozessflüssigkeit in den Kanal 44 eintreten und am gegenüberliegenden Ende des Kanals 44 austreten. Damit stellt sich im Kanal 44 dasselbe Prozessflüssigkeitsniveau ein wie im Flotationstank 10. Der Kanal mündet in einen Entnahmebehälter 45, beispielsweise über eine Verbindungsleitung 46, die den Kanal 44 mit dem Entnahmebehälter 45 verbindet, wobei der Kanal 44 auch direkt im Entnahmebehälter 45 münden kann. Aus dem Entnahmebehälter 45 kann Prozessflüssigkeit über eine Entnahmeleitung 18 entnommen werden. Die Entnahme aus dem Entnahmebehälter 45 der Fig.3 ersetzt somit die Entnahme aus dem Entnahmebereich 16 in der Ausführung nach Fig.1. Nachdem die leichteren und kleineren Feststoffe im Flotationstank 10 durch Flotation abgeschieden werden, gelangen nur mehr größere und schwerere Feststoffe in den Bereich des Bodenbereichs 15. Diese größeren und schwereren Feststoffe können nicht mehr im Kanal 44 aufsteigen, sodass im Kanal 44 nur reine Prozessflüssigkeit gefördert wird. Das kann auch durch einen labyrinthförmigen Bodenbereich 15, wie in Fig.3, unterstützt werden. Die Reinheit der Prozessflüssigkeit im Kanal 44 ist damit vergleichbar mit der Reinheit der Prozessflüssigkeit im Entnahmebereich 16 der Ausführung nach Fig.1.

Der Entnahmebehälter 45 kann auch zur Steuerung der Entnahmegeschwindigkeit von der Prozessflüssigkeit genutzt werden. Hierzu kann die Mündung der Verbindungsleitung 46 im Entnahmebehälter 45 in der Höhe verstellbar ausgeführt sein, beispielsweise mittels einer hydraulischen Hülse 47 wie in Fig.3, die auf der Verbindungsleitung 46 verschiebbar angeordnet ist. Je nach Einstellung der Hülse 47, bzw. allgemein je nach Höhe der Mündung der Verbindungsleitung 46 im Entnahmebehälter 45 fließt die Prozessflüssigkeit mehr oder weniger schnell in den Entnahmebehälter 45 und damit auch mehr oder weniger schnell in die Entnahmeleitung 18.

Es versteht sich von selbst, dass auch in der Ausführung nach Fig.1 ein derartiger Kanal 44 und Entnahmebehälter 45 vorgesehen sein könnte.

Zusätzlich kann ein weiterer Feststoffförderer 48 vorgesehen sein, der Späne aus dem oberen Bereich 14 des Flotationstankes 10 entfernt und beispielsweise einem Feststoffbehälter 43 zuführt.

## Patentansprüche

1. Aufbereitungseinrichtung zum Aufbereiten von mit Feststoffen beladener Prozessflüssigkeit durch das Trennen der Prozessflüssigkeit und der Feststoffe, wobei in der Aufbereitungseinrichtung (1) eine Filteranlage (20) mit einem Abscheidefilter (21) zur Filtration der Feststoffe aus der Prozessflüssigkeit vorgesehen ist, wobei in der Aufbereitungseinrichtung (1) ein Prozessflüssigkeitsbehälter (30) zur Aufnahme von in der Filteranlage (20) gefilterter Prozessflüssigkeit vorgesehen ist, **dadurch gekennzeichnet, dass** in der Aufbereitungseinrichtung (1) ein Flotationstank (10) und eine Zuführleitung (3) zum Zuführen von unreiner, mit Feststoffen beladener und mit Luftbläschen versetzter Prozessflüssigkeit vorgesehen sind, wobei die Zuführleitung (3) mit dem Flotationstank (10) verbunden ist und sich im Flotationstank (10) Feststoffpartikel durch Flotation in einen oberen Bereich (14) und durch Sedimentation in einem unteren Bodenbereich (15) des Flotationstanks (10) sammeln, dass sich im Flotationstank (10) zwischen dem oberen Bereich (14) und dem Bodenbereich (15) ein Entnahmebereich (16) mit Prozessflüssigkeit ausbildet und eine Entnahmeleitung (18) vorgesehen ist, wobei der Entnahmebereich (16) im unteren Drittel des Flotationstanks (10) über dem Bodenbereich (15) liegt, um Prozessflüssigkeit aus dem Entnahmebereich (16) zu entnehmen und/oder im Flotationstank (10) ein Kanal (44) vorgesehen ist, der an einem Ende im Bereich des Bodenbereich (15) mündet und am gegenüberliegenden Ende in einem vom Flotationstank (10) getrennten Entnahmebehälter (45) mündet und eine zweite Entnahmeleitung (18) vorgesehen ist, um Prozessflüssigkeit aus dem Entnahmebehälter (45) zu entnehmen, **und dass** in der Aufbereitungseinrichtung (1) Leitungen (11, 12) vorgesehen sind, um den Abscheidefilter (21) aus dem oberen Bereich (14) des Flotationstanks (10) und aus dem Bodenbereich (15) des Flotationstanks (10) mit mit Feststoffen beladener Prozessflüssigkeit zu beaufschlagen

2. Aufbereitungseinrichtung nach Anspruch 1, **dadurch gekennzeichnet, dass** eine weitere Entnahmeleitung (31) vorgesehen ist, um reine Prozessflüssigkeit aus dem Prozessflüssigkeitsbehälter (30) zu entnehmen.

3. Aufbereitungseinrichtung nach Anspruch 1, **dadurch gekennzeichnet, dass** eine Rückförderleitung (33) vorgesehen ist, die den Prozessflüssigkeitsbehälter (30) mit dem Flotationstank (10) verbindet, um Prozessflüssigkeit aus dem Prozessflüssigkeitsbehälter (30) dem Flotationstank (10) zuzuführen.

4. Aufbereitungseinrichtung nach Anspruch 1, **dadurch gekennzeichnet, dass** der Kanal (44) im oberen Bereich (14) des Flotationstankes (10) über eine Verbindungsleitung (46) mit dem Entnahmebehälter (45) verbunden ist, wobei die Höhe der Verbindungsleitung (46) im Entnahmebehälter (45) verstellbar ist.

5. Aufbereitungseinrichtung nach einem der Ansprüche 1 bis 4, **dadurch gekennzeichnet, dass** die Filteranlage (20) mehrstufig ausgeführt ist mit einem Grobfilter (25), der mit Prozessflüssigkeit aus dem oberen Bereich (14) des Flotationstanks (10) und aus dem Bodenbereich (15) des Flotationstanks (10) beaufschlagt ist, und mit einem Feinfilter (26), der mit im Grobfilter (25) grobgefilterter Prozessflüssigkeit beaufschlagt ist, wobei der Prozessflüssigkeitsbehälter die im Feinfilter (26) gefilterten Prozessflüssigkeit aufnimmt.

6. Aufbereitungseinrichtung nach einem der Ansprüche 1 bis 5, **dadurch gekennzeichnet, dass** im Flotationstank (10) ein Feststoffförderer (42) vorgesehen ist, der Feststoffe aus dem Bodenbereich (15) und/oder aus dem oberen Bereich des Flotationstankes (10) aus dem Flotationstank (10) fördert.

7. Verfahren zum Aufbereiten von mit Feststoffen beladener flüssiger Prozessflüssigkeit, indem die Prozessflüssigkeit und die Feststoffe getrennt werden, **dadurch gekennzeichnet, dass** die unreine, mit Feststoffen beladene und mit Luftbläschen versetzte Prozessflüssigkeit einem Flotationstank (10) zugeführt wird, in dem sich Feststoffe durch Flotation in einen oberen Bereich (14) des Flotationstanks (10) und durch Sedimentation in einem unteren Bodenbereich (15) des Flotationstanks (10) sammeln, **dass** Prozessflüssigkeit aus einem Entnahmebereich (16) des Flotationstanks (10), wobei der Entnahmebereich (16) im unteren Drittel des Flotationstanks (10) über dem Bodenbereich (15) liegt, zwischen dem oberen Bereich (14) und dem Bodenbereich (15) entnommen wird und an einer Entnahmeleitung (18) bereitgestellt wird und/oder Prozessflüssigkeit aus dem Bodenbereich (15) über einen Kanal (44) in einen Entnahmebehälter (45) gefördert wird, und der Prozessflüssigkeit aus dem Entnahmebehälter (45) über eine zweite Entnahmeleitung (18) bereitgestellt wird, **und dass** ein Abscheidefilter (21) einer Filteranlage (20) aus dem oberen Bereich (14) des Flotationstanks (10) und aus dem Bodenbereich (15) des Flotationstanks (10) mit mit Feststoffen beladener Prozessflüssigkeit beaufschlagt wird und die in der Filteranlage (20) gefilterte Prozessflüssigkeit in einem Prozessflüssigkeitsbehälter (30) aufgefangen wird.

8. Verfahren nach Anspruch 7, **dadurch gekennzeichnet, dass** Prozessflüssigkeit aus dem Prozessflüssigkeitsbehälter (30) entnommen wird und an einer weiteren Entnahmeleitung (31) bereitgestellt wird.

9. Verfahren nach Anspruch 7 oder 8, **dadurch gekennzeichnet, dass** der Abscheidefilter (21) aus dem Bodenbereich (15) des Flotationstanks (10) nur zeitweise mit mit Feststoffen beladener Prozessflüssigkeit beaufschlagt wird.

10. Verfahren nach einem der Ansprüche 7 bis 9, **dadurch gekennzeichnet, dass** Feststoffe aus dem Bodenbereich (15) und/oder aus dem oberen Bereich (14) des Flotationstanks (10) mit einem Feststoffförderer (42) aus dem Flotationstank (10) gefördert werden.

## Claims

1. Treatment device for treating process liquid loaded with solids by separating the process liquid and the solids, a filter system (20) having a separation filter (21) for filtering the solids from the process liquid being provided in the treatment device (1), a process liquid container (30) for receiving process liquid filtered in the filter system (20) being provided in the treatment device (1), **characterized in that** a flotation tank (10) and a supply line (3) for supplying impure process liquid loaded with solids and mixed with air bubbles are provided in the treatment device (1), wherein the supply line (3) is connected to the flotation tank (10) and solid particles collect in the flotation tank (10) by flotation into an upper region (14) and by sedimentation in a lower bottom region (15) of the flotation tank (10), **in that** a removal region (16) with process liquid is formed in the flotation tank (10) between the upper region (14) and the bottom region (15) and a removal line (18) is provided in order to remove process liquid from the removal region (16), wherein the removal region (16) is located above the bottom region (15) in the lower third of the flotation tank (10), and/or a channel (44) is provided in the flotation tank (10), which channel opens at one end in the region of the bottom region (15) and opens at the opposite end in a removal container (45) separated from the flotation tank (10), and a second removal line (18) is provided in order to remove process liquid from the removal container (45), **and in that** lines (11, 12) are provided in the treatment device (1) in order to supply the separation filter (21) with process liquid loaded with solids from the upper region (14) of the flotation tank (10) and from the bottom region (15) of the flotation tank (10).

2. Treatment device according to claim 1, **characterized in that** a further removal line (31) is provided in order to remove pure process liquid from the process liquid container (30).

3. Treatment device according to claim 1, **characterized in that** a return line (33) is provided which connects the process liquid container (30) to the flotation tank (10) in order to supply process liquid from the process liquid container (30) to the flotation tank (10).

4. Treatment device according to claim 1, **characterized in that** the channel (44) is connected to the removal container (45) in the upper region (14) of the flotation tank (10) via a connecting line (46), the height of the connecting line (46) in the removal container (45) being adjustable.

5. Treatment device according to any of claims 1 to 4, **characterized in that** the filter system (20) has a multi-stage design with a coarse filter (25), which is supplied with process liquid from the upper region (14) of the flotation tank (10) and from the bottom region (15) of the flotation tank (10), and with a fine filter (26), which is supplied with process liquid coarsely filtered in the coarse filter (25), the process liquid container receiving the process liquid filtered in the fine filter (26).

6. Treatment device according to any of claims 1 to 5, **characterized in that** a solids conveyor (42) is provided in the flotation tank (10), which conveys solids from the bottom region (15) and/or from the upper region of the flotation tank (10) out of the flotation tank (10).

7. Method for treating liquid process liquid loaded with solids by separating the process liquid and the solids, **characterized in that** the impure process liquid loaded with solids and mixed with air bubbles is supplied to a flotation tank (10), in which solids collect by flotation into an upper region (14) of the flotation tank (10) and by sedimentation in a lower bottom region (15) of the flotation tank (10), **in that** process liquid is removed from a removal region (16) of the flotation tank (10) between the upper region (14) and the bottom region (15), the removal region (16) being located in the lower third of the flotation tank (10) above the bottom region (15), and said liquid is provided on a removal line (18), and/or process liquid is conveyed out of the bottom region (15) into a removal container (45) via a channel (44), and the process liquid from the removal container (45) is provided via a second removal line (18), **and in that** a separation filter (21) of a filter system (20) is supplied with process liquid loaded with solids from the upper region (14) of the flotation tank (10) and from the bottom region (15) of the flotation tank (10), and the process liquid filtered in the filter system (20) is collected in a process liquid container (30).

8. Method according to claim 7, **characterized in that** process liquid is removed from the process liquid container (30) and is provided on a further removal line (31).

9. Method according to either claim 7 or claim 8, **characterized in that** the separation filter (21) is only temporarily supplied with process liquid loaded with solids from the bottom region (15) of the flotation tank (10).

10. Method according to any of claims 7 to 9, **characterized in that** solids from the base region (15) and/or from the upper region (14) of the flotation tank (10) are conveyed from the flotation tank (10) by a solids conveyor (42).

## Revendications

1. Dispositif de traitement pour le traitement d'un liquide de processus chargé de matières solides en séparant le liquide de processus et les matières solides, dans lequel, dans le dispositif de traitement (1), une installation de filtration (20) comportant un filtre de séparation (21) est prévue pour la filtration des matières solides du liquide de processus, dans lequel, dans le dispositif de traitement (1), un récipient de liquide de processus (30) est prévu pour la réception de liquide de processus filtré dans l'installation de filtration (20), **caractérisé en ce que,** dans le dispositif de traitement (1), sont prévus un réservoir de flottaison (10) et une conduite d'amenée (3) permettant d'amener un liquide de processus impur, chargé de matières solides et mélangé avec des bulles d'air, dans lequel la conduite d'amenée (3) est raccordée au réservoir de flottaison (10) et des particules de matière solide s'accumulent dans le réservoir de flottaison (10) par flottaison dans une zone supérieure (14) et par sédimentation dans une zone de fond (15) inférieure du réservoir de flottaison (10), **en ce que,** dans le réservoir de flottaison (10), une zone de prélèvement (16) comportant du liquide de processus se forme entre la zone supérieure (14) et la zone de fond (15) et une conduite de prélèvement (18) est prévue, dans lequel la zone de prélèvement (16) se situe dans le tiers inférieur du réservoir de flottaison (10) au-dessus de la zone de fond (15) pour prélever du liquide de processus de la zone de prélèvement (16) et/ou un canal (44) est prévu dans le réservoir de flottaison (10), lequel canal débouche, au niveau d'une extrémité, dans la zone de la zone de fond (15) et débouche, au niveau de l'extrémité opposée, dans un récipient de prélèvement (45) séparé du réservoir de flottaison (10), et une seconde conduite de prélèvement (18) est prévue pour prélever du liquide de processus du récipient de prélèvement (45), **et en ce que,** dans le dispositif de traitement (1), sont prévues des conduites (11, 12) pour alimenter le filtre de séparation (21) en liquide de processus chargé de matières solides à partir de la zone supérieure (14) du réservoir de flottaison (10) et à partir de la zone de fond (15) du réservoir de flottaison (10).

2. Dispositif de traitement selon la revendication 1, **caractérisé en ce qu'**une conduite de prélèvement supplémentaire (31) est prévue pour prélever du liquide de processus pur du récipient de liquide de processus (30).

3. Dispositif de traitement selon la revendication 1, **caractérisé en ce qu'**une conduite de retour (33) est prévue, laquelle raccorde le récipient de liquide de processus (30) au réservoir de flottaison (10) afin d'amener du liquide de processus au réservoir de flottaison (10) à partir du récipient de liquide de processus (30).

4. Dispositif de traitement selon la revendication 1, **caractérisé en ce que** le canal (44) dans la zone supérieure (14) du réservoir de flottaison (10) est raccordé au récipient de prélèvement (45) par l'intermédiaire d'une conduite de raccordement (46), dans lequel la hauteur de la conduite de raccordement (46) est réglable dans le récipient de prélèvement (45).

5. Dispositif de traitement selon l'une des revendications 1 à 4,
**caractérisé en ce que** l'installation de filtration (20) est réalisée en plusieurs étapes, comportant un filtre grossier (25) alimenté en liquide de processus à partir de la zone supérieure (14) du réservoir de flottaison (10) et à partir de la zone de fond (15) du réservoir de flottaison (10), et comportant un filtre fin (26) alimenté en liquide de processus filtré grossièrement dans le filtre grossier (25), dans lequel le récipient de liquide de processus reçoit le liquide de processus filtré dans le filtre fin (26).

6. Dispositif de traitement selon l'une des revendications 1 à 5,
**caractérisé en ce que,** dans le réservoir de flottaison (10), un transporteur de matières solides (42) est prévu, lequel transporte des matières solides depuis le réservoir de flottaison (10) à partir de la zone de fond (15) et/ou à partir de la zone supérieure du réservoir de flottaison (10).

7. Procédé permettant le traitement d'un liquide de processus liquide chargé de matières solides par séparation du liquide de processus et des matières solides, **caractérisé en ce que** le liquide de processus impur, chargé de matières solides et mélangé avec des bulles d'air est amené à un réservoir de flottaison (10) dans lequel des matières solides s'accumulent par flottaison dans une zone supérieure (14) du réservoir de flottaison (10) et par sédimentation dans une zone de fond (15) inférieure du réservoir de flottaison (10), **en ce que** du liquide de processus est prélevé d'une zone de prélèvement (16) du réservoir de flottaison (10) entre la zone supérieure (14) et la zone de fond (15) et est fourni à une conduite de prélèvement (18), dans lequel la zone de prélèvement (16) se situe dans le tiers inférieur du réservoir de flottaison (10) au-dessus de la zone de fond (15), et/ou du liquide de processus est transporté depuis la zone de fond (15) jusque dans un récipient de prélèvement (45) par l'intermédiaire d'un canal (44), et le liquide de processus est fourni à partir du récipient de prélèvement (45) par l'intermédiaire d'une seconde conduite de prélèvement (18), **et en ce qu'**un filtre de séparation (21) d'une installation de filtration (20) est alimenté en liquide de processus chargé de matières solides à partir de la zone supérieure (14) du réservoir de flottaison (10) et à partir de la zone de fond (15) du réservoir de flottaison (10) et le liquide de processus filtré dans l'installation de filtration (20) est récupéré dans un récipient de liquide de processus (30).

8. Procédé selon la revendication 7, **caractérisé en ce que** du liquide de processus est prélevé du récipient de liquide de processus (30) et est fourni à une conduite de prélèvement supplémentaire (31).

9. Procédé selon la revendication 7 ou 8, **caractérisé en ce que** le filtre de séparation (21) n'est alimenté que temporairement en liquide de processus chargé de matières solides à partir de la zone de fond (15) du réservoir de flottaison (10).

10. Procédé selon l'une des revendications 7 à 9, **caractérisé en ce que** des matières solides sont transportées depuis le réservoir de flottaison (10) au moyen d'un transporteur de matières solides (42), à partir de la zone de fond (15) et/ou à partir de la zone supérieure (14) du réservoir de flottaison (10).
